# EUROPÄISCHE PATENTSCHRIFT

(11) **EP 1 787 745 B1**
(45) Veröffentlichungstag und Bekanntmachung des Hinweises auf die Patenterteilung: **19.11.2008**
(21) Anmeldenummer: 06117989.1
(22) Anmeldetag: 27.07.2006
(51) Int. Cl.: B23D 45/12, B23D 47/04, B26D 3/16, B26D 7/14

(54) **Trennvorrichtung für Schlauchmaterial**
Cutting device for hose material
Dispositif de coupe pour tuyau flexible

(30) Priorität: 18.11.2005 DE 102005055115
(43) Veröffentlichungstag der Anmeldung: 23.05.2007
(73) Patentinhaber: Dipl.-Ing. H. Schulz HDS Hydraulik GmbH & Co. KG, 51647 Gummersbach (DE)
(72) Erfinder: Siemens, Kornelius, 51647, Gummersbach (DE)
(74) Vertreter: Patentanwälte Dr. Solf & Zapf

(56) Entgegenhaltungen:
- EP-A- 1 254 748
- DE-A1- 2 425 492
- US-A- 2 064 017
- US-A- 2 293 721
- US-A- 3 212 185
- US-A- 3 978 747

## Beschreibung

Die vorliegende Erfindung betrifft ein Verfahren und eine Vorrichtung zum Trennen von Schlauchmaterial in einer Schnittebene senkrecht zur Längsachse des Schlauchmaterials, wobei das Schlauchmaterial über beidseitig der Schnittebene liegende Anlageelemente gebogen und vorgespannt wird und danach durch Erzeugung einer Zugspannung in der vorgespannten Lage durchtrennt wird, wobei während des Trennvorgangs die Zugspannung erhöht wird.

Ein solches Verfahren und eine derartige Vorrichtung sind aus US 3978747 bekannt.

Derartige Verfahren und darauf beruhende Trennvorrichtungen werden zum Durchtrennen von Hochdruckschlauchmaterial mit einer Vielzahl von Stahldrahteinlagen eingesetzt.

Ein solches Verfahren und eine derartige Vorrichtung sind auch in der DE 24 25 492 A1 offenbart. Dabei wird das Schlauchmaterial durch Anliegen zwischen zwei äußeren rechts und links der Schnittebene angeordneten und, als Stehbolzen ausgebildeten Schlauchanschlägen und zwei inneren, unmittelbar neben der Schnittebene befindlichen Bügeln in gekrümmter und damit vorgespannter Lage gehalten. Währen des Schneidvorgangs kann die Zugspannung in dem Schlauchmaterial durch stärkeres Biegen erhöht werden. Der Nachteil dieses bekannten Verfahrens und dieser Vorrichtung besteht darin, dass während des Trennvorganges das gebogene Schlauchmaterial im Bereich seines inneren Radius gestaucht wird. Hierdurch wird auf das Sägeblatt eine beträchtliche Klemmwirkung ausgeübt, die mit hoher Hitzeentwicklung verbunden ist und zu großem Materialverschleiß führt, verursacht durch die hochfesten Stahldrähte im Schlauchmaterial. Als Folge wird das Durchtrennen des Schlauchmaterials erheblich erschwert und die Standzeit der teuren Sägeblätter stark vermindert.

Das Dokument US-A-3 978 474 beschreibt einen sehr ähnlichen Stand der Technik, da auch mit dem daraus bekannten Verfahren und der dazu eingesetzten Vorrichtung der zu trennende Schlauch ausschließlich durch Biegen und eine auseinanderziehenen Zugkraft vorgespannt wird, wobei die Biegung während des Schnittvorgangs verstärkt wird. Dadurch kommt es ebenfalls zu einem Stauchen (Zusammendrücken) des Schlauches im Bereich des inneren, auf einem ortsfesten Widerlager (anvil) aufliegenden Biegeradius, so dass auf das Trennmitteln eine Klemm- und Reibwirkung im Schnittspalt ausgeübt wird.

Der vorliegenden Erfindung liegt die Aufgabe zugrunde, ein Verfahren und eine Vorrichtung der eingangs genannten Art zu entwickeln, um die Klemmwirkung zwischen Schlauchmaterial und Trennmittel, insbesondere bei fortgeschrittenem Schneidvorgang, zu vermindern und als Folge daraus den Materialverschleiß zu reduzieren.

Diese Aufgabe wird erfindungsgemäß durch ein Verfahren gemäß Patentanspruch 1 bzw. durch eine Trennvorrichtung nach Patentanspruch 3 gelöst. Vorteilhafte Ausgestaltungen der Erfindung sind in den abhängigen Ansprüchen enthalten.

Erfindungsgemäß werden während des Trennvorgangs auf das bereits teilweise durchtrennte Schlauchmaterial längs der Schlauchachse ansteigende Zugspannungen ausgeübt. Dabei können die durch die Biegevorrichtung beidseitig der Schnittebene eingeleiteten Kräfte nicht in außerhalb der ortsfesten Anlageelemente liegende Schlauchabschnitte abgeleitet werden, da diese Schlauchabschnitte infolge ihrer Fixierung durch die als Klemmvorrichtung ausgebildeten Anlageelemente nicht mehr der eingeleiteten Kraft nachgeben können und in der ursprünglichen Lage verharren. Der zwischen den Anlageelementen liegende Schlauchabschnitt wird daher an der Schnittfuge entgegen seinem durch die anfängliche Vorspannung erzeugten Krümmungsverlauf auseinandergezogen, wobei die eine Klemmwirkung verursachenden Druckspannungen im Schlauchmaterial, die bei einer reinen Biegung auftreten würden, weitgehend reduziert werden können.

Die sich erhöhende Zugspannung im Schlauchmaterial bewirkt somit gerade auch auf der Seite der inneren Biegung eine Verbreiterung der Schnittfuge, so dass das Trennmittel seitlich durchgehend berührungsfrei gegenüber dem Schlauchmaterial und dessen Stahldrahteinlagen arbeitet. Somit ist bei der Zustellung des Trennmittels ein deutlich geringerer Kraftaufwand erforderlich. Auch verlängert sich vorteilhafterweise die Standzeit des Trennmittels erheblich. Der geringere Materialverschleiß trägt dazu bei, dass Schäden an den, insbesondere aus speziellen Stahllegierungen bestehenden Trennmitteln, vermieden werden können und damit ein hohes Maß an Betriebssicherheit erreicht wird.

Als weiterer Vorteil ergibt sich eine absolut rechtwinklig zur Schlauchachse verlaufende Schnittfläche, die zudem abriebfrei ist, wodurch nachteilige Auswirkungen auf weitere Verarbeitungsprozesse vermieden werden.

Weitere vorteilhafte Ausgestaltungsmerkmale werden anhand eines bevorzugten, in den Zeichnungen veranschaulichten Ausführungsbeispiels genauer erläutert.

Es zeigen:
- Fig. 1: eine Darstellung der erfindungsgemäßen Trennvorrichtung im Zustand vor einem Trennvorgang eines Schlauches,
- Fig. 2: eine Darstellung der erfindungsgemäßen Trennvorrichtung im Zustand nach dem Trennvorgang.

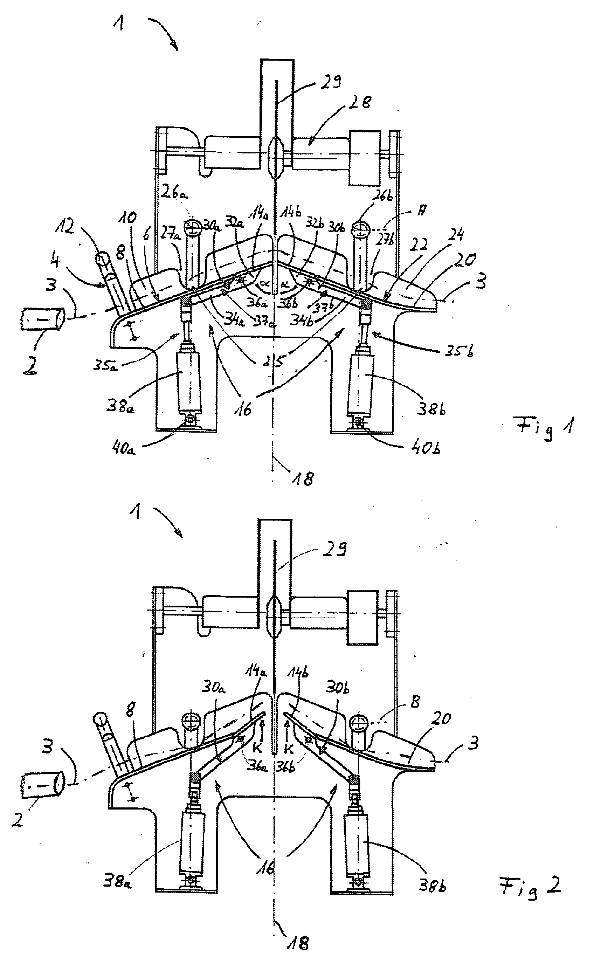

Fig. 1 zeigt eine erfindungsgemäße Trennvorrichtung 1 zum Durchtrennen eines Schlauches, der in die Trennvorrichtung 1 eingelegt ist, vor einem Trennvorgang. Ein Schlauchmaterial 2 mit seiner Schlauchachse 3 wird durch einen Führungsrahmen 4 auf eine erste ortsfeste Auflageschiene 6 gelegt, die aus einer ersten Bodenplatte 8 und einer senkrecht zu der ersten Bodenplatte 8 angeordneten ersten Seitenführung 10 besteht. Die erste Bodenplatte 8 schließt mit einer Schnittebene 18 einen Winkel α ein, der < 90 ° ist. Sie ist mit ihrem von der Schnittebene 18 abgewandten Außenabschnitt nach unten abgewinkelt. Der Führungsrahmen 4 ist mit einem aus der Rahmenebene abschwenkbaren Oberrohr 12 versehen, um das Einlegen des Schlauchmaterials 2 zu erleichtern und um im geschlossenen Zustand des Führungsrahmens 4 das Schlauchmaterial 2, das von einer nicht dargestellten Rolle abgezogen wird, in seiner aufgelegten Lage zu positionieren.

Eine Biegevorrichtung ist als Spreizvorrichtung 16 mit schwenkbaren Auflageplatten 14a, b ausgeführt. Die schwenkbare Auflageplatte 14a der Spreizvorrichtung 16 schließt sich mit gleicher Steigung fluchtend an die in Richtung der Schnittebene 18 aufwärts gerichtete erste Bodenplatte 8 an. In einer Ruhestellung bei Einführen des Schlauchmaterials 2 bildet daher auch die beweglich Auflageplatte 14a den Winkel α mit der Schnittebene 18. Spiegelbildlich zu der schwenkbaren Auflageplatte 14a und symmetrisch zu der Schnittebene 18 ist die weitere schwenkbare, von der Schnittebene 18 abwärts gerichtete Auflageplatte 14b der Spreizvorrichtung 16 angeordnet. Mit gleicher von der Schnittebene 18 nach außen abwärts führender Steigung schließt sich fluchtend an diese Auflageplatte 14b eine zweite Bodenplatte 20 einer ortsfesten zweiten Auflageschiene 22 an. Die zweite Bodenplatte 20 läuft nach außen waagerecht aus und ist zur Führung des Schlauchmaterials 2 mit einer zweiten Seitenführung 24 versehen.

Zusammen mit den ortsfesten Auflageschienen 6, 22 bilden Anlageelemente 26a, b eine Anlagevorrichtung 25. Die Anlageelemente 26a, b sind als ortsfeste, d. h. nicht den schwenkbaren Auflageplatten 14a, 14b folgende, Niederhalter symmetrisch zur Schnittebene 18 mit senkrecht zur Achse 3 des Schlauchmaterials 2 angeordneten Rollen ausgeführt. Die Niederhalter können eine Einführposition A (Fig. 1) zum Einlegen des Schlauchs 2 und eine Klemmposition B (Fig. 2) zur Fixierung des Schlauchs 2 einnehmen. Sie werden in dem Ausführungsbeispiel pneumatisch betätigt und drücken in der Klemmposition B das auf den Auflageschienen 6, 22 liegende Schlauchmaterial 2 gegen die erste 8 bzw. die zweite Bodenplatte 20 nieder. Dadurch klemmen sie das Schlauchmaterial 2 fest und können sämtliche durch die Spreizvorrichtung 16 beim Trennvorgang auf das Schlauchmaterial 2 ausgeübten Kräfte K aufnehmen, so dass die außerhalb der Anlageelemente 26a, 26b befindlichen Schlauchabschnitte bezüglich der über die Spreizvorrichtung 16 übertragenen Kräfte K kräftefrei bleiben. Die Krafteinleitung erfolgt zweckmäßigerweise durch zwei gleichgroße Kraftkomponenten K beidseitig der Schnittebene 18.

Beide Seitenführungen 10, 24 der ortsfesten Auflageschienen 6, 22 erstrecken sich zur Schnittebene 18 hin über die Länge der Bodenplatten 8, 20 hinaus entlang der Auflageplatten 14a, und weisen Ausbuchtungen 27a, b zur Aufnahme der abgesenkten Anlageelemente 26 a, b auf.

Die Bodenplatten 8, 20 der ortsfesten Auflageschienen 6, 22 bilden zusammen mit den innenliegenden beweglichen Auflageplatten 14a, b der Spreizvorrichtung 16 zwei entgegen der Schnittrichtung gerichtete, auf die Schnittebene 18 zulaufende symmetrische Rampen, die den Winkel 2 α umschließen und über die das Schlauchmaterial 2 geführt wird, wodurch das Schlauchmaterial 2 vorgespannt wird. Durch die Niederhalter wird das Schlauchmaterial 2 in der vorgespannten Lage fixiert. Zum Durchtrennen des Schlauchmaterials 2 wird das Trennmittel 29, das in der dargestellten Ausführungsform als rotierende Trennscheibe ausgeführt ist, auf das gekrümmte Schlauchmaterial 2 abgesenkt.

Die schwenkbaren Auflageplatten 14a, b der Spreizvorrichtung 16 werden jeweils über eine Antriebsvorrichtung 35a, b beaufschlagt, die aus einer Antriebsquelle 38a, b und einem Kraftübertragungssystem 37a, b besteht. Dabei sind die Auflageplatten 14a, b jeweils einstückig mit einem Lastarm 32a, b eines zweiarmigen, mittels einer Drehachse 36a, b an der Anlagevorrichtung 25 gelagerten Hebels 30a, b verbunden, dessen Kraftarm 30a, b durch eine Druckluftzylinder-Kolbenanordnung als Antriebsquelle 38a, b angelenkt wird. Die Druckluftzylinder-Kolbenanordnung ihrerseits ist an ihrem Fußpunkt über ein Gelenk 40a, b an einem Fundament der Trennvorrichtung 1 verankert.

Die Wirkungsweise der erfindungsgemäßen Trennvorrichtung 1 ist in Fig. 2 verdeutlicht. Nachdem das Trennmittel 29 das vorgedehnte Schlauchmaterial 2 in etwa zur Hälfte des Schlauchmaterial-Durchmessers durchtrennt hat, wirken die mittels der Druckluftzylinder-Kolbenanordnung des Hebelmechanismus 30a, b; 36 a, b und der Auflageplatten 14a, b auf den Schlauch wirkenden Kräfte derart, dass sich die von Beginn des Schneidvorgangs unter Druck stehenden Auflageplatten 14a, 14b nach oben bewegen können und die Schnittfuge des Schlauchmaterials 2 aufweiten. Die so geöffneten Auflageplatten 14a, b mit ihren gegenüber den Bodenplatten 8, 20 steileren Anstellwinkeln ziehen das noch stoffschlüssig miteinander verbundene Schlauchmaterial 2 während des fortschreitenden Trennvorgangs auseinander. Das Trennmittel 29 wird folglich bei seinem weiteren Absenken aufgabengemäß von der Klemmwirkung durch das Schlauchmaterial 2 befreit.

## Patentansprüche

1. Verfahren zum Trennen von Schlauchmaterial (2) in einer Schnittebene (18) senkrecht zur Längsachse des Schlauchmaterials (2), wobei das Schlauchmaterial (2) über beidseitig der Schnittebene (18) liegende Anlageelemente (26a, b) gebogen und vorgespannt wird und danach durch Erzeugung einer Zugspannung in der vorgespannten Lage durchtrennt wird, wobei während des Trennvorgangs die Zugspannung erhöht wird,
**dadurch gekennzeichnet, dass** das Schlauchmaterial (2) in der vorgespannten Lage in seinen Anlagebereichen gegen Lageveränderung fixiert wird und während des Schnittvorgangs eine der Schnittbewegung entgegengerichtete Kraft (K) auf das Schlauchmaterial (2) derart eingeleitet wird, dass das Schlauchmaterial (2) auf der noch verbundenen Seite auseinandergezogen und **dadurch** eine beim Trennen des Schlauchmaterials (2) entstehende Schnittfuge während des Schnittvorgangs aufgeweitet wird.

2. Verfahren nach Anspruch 1,
**dadurch gekennzeichnet, dass** die Krafteinleitung mittels zwei gleichgroßer Kraftkomponenten (K) beidseitig der Schnittebene (18) erfolgt.

3. Trennvorrichtung (1) zum Trennen von Schlauchmaterial (2) insbesondere nach dem Verfahren gemäß Anspruch 1 oder 2, mit einem verschiebbaren Trennmittel (29) sowie einer Anlagevorrichtung (25) mit Anlageelementen (26a, b) und mit einer Biegevorrichtung (16),
**dadurch gekennzeichnet, dass** die Anlageelemente (26a, b) als Klemmvorrichtung für das Schlauchmaterial (2) ausgebildet sind und die Biegevorrichtung derart ausgebildet ist, dass eine Krafleinleitung auf das Schlauchmaterial (2) entgegen der Schnittbewegung beidseitig unmittelbar neben der Schnittebene (18) im Sinne einer das Schlauchmaterial (2) auf seiner dem Trennmittel (29) gegenüberliegenden Seite auseinanderziehenden Zugkraft möglich ist.

4. Trennvorrichtung (1) nach Anspruch 3,
**dadurch gekennzeichnet, dass** die Anlageelemente (26a, b) beidseitig der Schnittebene (18) als senkrecht zur Achse (3) des Schlauchmaterials (2) angeordnete Niederhalter ausgeführt sind und eine Einführposition (A) zum Einlegen des Schlauchs und eine Klemmposition (B) zur Fixierung des Schlauchs (2) einnehmen können.

5. Trennvorrichtung (1) nach Anspruch 3 oder 4,
**dadurch gekennzeichnet, dass** die Biegevorrichtung als Spreizvorrichtung (16) mit schwenkbaren Auflageplatten (14a, b) ausgeführt ist.

6. Trennvorrichtung (1) nach Anspruch 5,
**dadurch gekennzeichnet, dass** die Auflageplatten (14a, b) der Spreizvorrichtung (16) spiegelbildlich zur Schnittebene (18) angeordnet sind, schwenkbar an der Anlagevorrichtung (25) gelagert sind und zur Krafteinleitung auf das Schlauchmaterial (2) mit einer Antriebsvorrichtung (35a, b) verbunden sind.

7. Trennvorrichtung (1) nach Anspruch 5 oder 6,
**dadurch gekennzeichnet, dass** die Auflageplatten (14a, b) in einer Ruhestellung jeweils mit der Schnittebene (18) einen Winkel (α) kleiner 90 ° bilden.

8. Trennvorrichtung nach Anspruch 6 oder 7,
**dadurch gekennzeichnet, dass** die Antriebsvorrichtungen (35a, b) der beweglichen Auflageplatten (14a, b) der Spreizvorrichtung (16) aus einer Antriebsquelle (38a, b) und einem Kraftübertragungssystem (37a, b) bestehen.

9. Trennvorrichtung nach Anspruch 8,
**dadurch gekennzeichnet, dass** die Antriebsquelle (38a, b) als pneumatischer, hydraulischer, elektrischer oder elektromechanischer Antrieb ausgeführt ist.

10. Trennvorrichtung nach Anspruch 8 oder 9,
**dadurch gekennzeichnet, dass** das Kraftübertragungssystem (37a, b) aus einem mittels einer Drehachse (36 a, b) an der Anlagevorrichtung (25) gelagerten zweiarmigen Hebel (30a, b) besteht, dessen Kraftarm (34a, b) mit der Antriebsquelle (38a, b) drehbar verbunden und dessen Lastarm einstückig mit der Auflageplatte (14a, b) ausgeführt ist.

11. Trennvorrichtung nach Anspruch 10,
**dadurch gekennzeichnet, dass** die Drehachse (36a, b) des Hebels (30a, b) unter der jeweiligen Auflageplatte (14a, b) angeordnet ist.

12. Trennvorrichtung nach einem der Ansprüche 3 bis 11,
**dadurch gekennzeichnet, dass** die Anlagevorrichtung (25) eine erste (6) und eine zweite ortsfeste Auflageschiene (22) umfasst, die jeweils mit ihrem zur Schnittebene (18) gewandten Endabschnitt an die jeweiligen beweglichen Auflageplatten (14a, b) der Spreizvorrichtung (16) fluchtend angrenzen und in von der Schnittebene (18) wegweisender Richtung abwärts geneigt verlaufen.

13. Trennvorrichtung nach Anspruch 12,
**dadurch gekennzeichnet, dass** dieersteAuflageschiene(6)an ihrem von der Schnittebene (18) abgewandten Endabschnitt einen Führungsrahmen (4) aufweist.

14. Trennvorrichtung nach Anspruch 13,
**dadurch gekennzeichnet, dass** der Führungsrahmen (4) ein Rohrrahmen mit abschwenkbaren Oberrohr (12) ist.

15. Trennvorrichtung nach Anspruch 12 oder 13,
**dadurch gekennzeichnet, dass** die Auflageschienen (6, 22) jeweils aus einer Bodenplatte (8, 20) und einer senkrecht zur Bodenplatte (8, 20) angebrachten Seitenführung (10, 24) bestehen, wobei die Bodenplatten (8, 20) mit der Schnittebene (18) jeweils einen Winkel (α) bilden, der gleich dem Winkel (α) ist, den die Auflageplatten (14a, b) in Ruhestellung mit der Schnittebene (18) einschließen.

16. Trennvorrichtung nach Anspruch 15,
**dadurch gekennzeichnet, dass** die erste Bodenplatte (8) in ihrem von der Schnittebene (18) abgewandten Endabschnitt nach unten abgewinkelt ist und die zweite Bodenplatte (20) in ihrem von der Schnittebene (18) abgewandten Endabschnitt waagrecht ausläuft.

17. Trennvorrichtung nach Anspruch 16,
**dadurch gekennzeichnet, dass** die erste (10) und zweite Seitenführung (24) sich nach innen über die Länge der Bodenplatten (8, 20) hinaus entlang der beweglichen Auflageplatten (14a, b) erstrecken und im Bereich der Anlageelemente (26a, b) Ausbuchtungen (27a, b) aufweisen.

## Claims

1. A method for severing hose material (2) in a cutting plane (18) perpendicularly to the longitudinal axis of the hose material (2), the hose material (2) being bent and prestressed via abutment elements (26a, b) located on both sides of the cutting plane (18) and thereafter being severed by the creation of a tensile stress in the prestressed position, the tensile stress being increased during the severing operation,
**characterised in that** the hose material (2) in the prestressed position is fixed in its abutment regions to prevent position-change and during the cutting operation a force (K) opposed to the cutting movement is introduced onto the hose material (2) in such a way that the hose material (2) is pulled apart on the side which is still joined and a kerf forming during the severing of the hose material (2) is widened during the cutting operation.

2. A method according to Claim 1,
**characterised in that** the introduction of force is effected by means of two equal force components (K) on both sides of the cutting plane (18).

3. A severing device (1) for severing hose material (2) in particular according to the method as claimed in Claim 1 or 2, comprising a displaceable severing means (29) and also an abutment device (25) with abutment elements (26a, b) and a bending device (16),
**characterised in that** the abutment elements (26a, b) are designed as a clamping device for the hose material (2) and the bending device is designed in such a way that the introduction of force onto the hose material (2) opposite the cutting movement is possible on both sides immediately adjacent to the cutting plane (18) in the sense of a tensile force pulling the hose material (2) apart on its side opposite the severing means (29).

4. A severing device (1) according to Claim 3,
**characterised in that** the abutment elements (26a, b) on both sides of the cutting plane (18) are designed as hold-down devices arranged perpendicularly to the axis (3) of the hose material (2) and may adopt an insertion position (A) for the insertion of the hose and a clamping position (B) for the fixing of the hose (2).

5. A severing device (1) according to Claim 3 or 4,
**characterised in that** the bending device is designed as an expansion device (16) with pivotable support plates (14a, b).

6. A severing device (1) according to Claim 5,
**characterised in that** the support plates (14a, b) of the expansion device (16) are positioned in mirror image relationship to the cutting plane (18), are pivotally mounted on the abutment device (25) and are connected to a drive device (35a, b) for the introduction of force onto the hose material (2).

7. A severing device (1) according to Claim 5 or 6,
**characterised in that** the support plates (14a, b) in an inoperative position each form an angle (α) of less than 90° with the cutting plane (18).

8. A severing device according to Claim 6 or 7,
**characterised in that** the drive devices (35a, b) of the movable support plates (14a, b) of the expansion device (16) consist of a drive source (38a, b) and a force-transfer system (37a, b).

9. A severing device according to Claim 8,
**characterised in that** the drive source (38a, b) is a pneumatic, hydraulic, electric or electromechanical drive.

10. A severing device according to Claim 8 or 9,
**characterised in that** the force-transfer system (37a, b) consists of a two-armed lever (30a, b), mounted by means of an axis of rotation (36a, b) on the abutment device (25), the force arm (34a, b) of which lever is rotatably connected to the drive source (38a, b) and the load arm of which is constructed as one piece with the support plate (14a, b).

11. A severing device according to Claim 10,
**characterised in that** the axis of rotation (36a, b) of the lever (30a, b) is positioned underneath the respective support plate (14a, b).

12. A severing device according to one of Claims 3 to 11,
**characterised in that** the abutment device (25) comprises a first (6) and a second fixed support rail (22), the respective end portions of which, directed towards the cutting plane (18), adjoin the respective movable support plates (14a, b) of the expansion device (16) so as to be aligned therewith and extend, inclined downwardly, in the direction away from the cutting plane (18).

13. A severing device according to Claim 12,
**characterised in that** the first support rail (6) has a guide frame (4) on its end portion remote from the cutting plane (18).

14. A severing device according to Claim 13,
**characterised in that** the guide frame (4) is a tubular frame with an upper tube (12) which may be swivelled away.

15. A severing device according to Claim 12 or 13,
**characterised in that** the support rails (6, 22) each consist of a base plate (8, 20) and a lateral guide (10, 24) attached perpendicularly to the base plate (8, 20), the base plates (8, 20) each forming with the cutting plane (18) an angle (α) which is equal to the angle (α) that the support plates (14a, b) in the inoperative position form with the cutting plane (18).

16. A severing device according to Claim 15,
**characterised in that** the first base plate (8) is angled downwardly in its end portion remote from the cutting plane (18) and the second base plate (20) runs out horizontally in its end portion remote from the cutting plane (18).

17. A severing device according to Claim 16,
**characterised in that** the first (10) and second lateral guide (24) extend inwardly beyond the length of the base plates (8, 20) along the movable support plates (14a, b) and have indentations (27a, b) in the region of the abutment elements (26a, b).

## Revendications

1. Procédé de séparation de matériau de tuyau (2) dans un plan de coupe (18) perpendiculaire à l'axe longitudinal du matériau de tuyau (2), le matériau de tuyau (2) étant plié et précontraint par des éléments d'appui (26a, b) situés de part et d'autre du plan de coupe (18) puis séparé par la production d'un effort de traction dans la position précontrainte, l'effort de traction étant accru pendant le processus de séparation,
**caractérisé en ce que** le matériau de tuyau (2) dans la position précontrainte est fixé dans ses zones d'appui pour ne pas changer de position et pendant le processus de coupe une force (K) opposée au déplacement de coupe est transmise au matériau de tuyau (2) de telle sorte que le matériau de tuyau (2) est étiré sur le côté encore assemblé et de ce fait une saignée produite lors de la séparation du matériau de tuyau (2) est élargie pendant le processus de coupe.

2. Procédé selon la revendication 1,
**caractérisé en ce que** la transmission de force s'effectue au moyen de deux composantes de force (K) de même valeur de part et d'autre du plan de coupe (18).

3. Dispositif de séparation (1) destiné à séparer le matériau de tuyau (2) en particulier après le procédé selon la revendication 1 ou 2, comprenant un moyen de séparation mobile (29) ainsi qu'un dispositif d'appui (25) doté d'éléments d'appui (26a, b) et d'un dispositif de pliage (16),
**caractérisé en ce que** les éléments d'appui (26a, b) sont réalisés comme un dispositif de serrage pour le matériau de tuyau (2) et le dispositif de pliage est réalisé de telle sorte qu'une transmission de force sur le matériau de tuyau (2) dans le sens contraire du déplacement de coupe, sur les deux côtés directement à côté du plan de coupe (18) au sens d'une force de traction étirant le matériau de tuyau (2) sur son côté opposé au moyen de séparation (29), est possible.

4. Dispositif de séparation (1) selon la revendication 3,
**caractérisé en ce que** les éléments d'appui (26a, b) sont réalisés de part et d'autre du plan de coupe (18) comme des serre-flans disposés perpendiculairement à l'axe (3) du matériau de tuyau (2) et peuvent adopter une position d'introduction (A) destinée à insérer le tuyau et une position de serrage (B) destinée à fixer le tuyau (2).

5. Dispositif de séparation (1) selon la revendication 3 ou 4,
**caractérisé en ce que** le dispositif de pliage est réalisé comme un dispositif d'écartement (16) doté de plaques de support pivotantes (14a, b).

6. Dispositif de séparation (1) selon la revendication 5,
**caractérisé en ce que** les plaques de support (14a, b) du dispositif d'écartement (16) sont disposées à symétrie spéculaire par rapport au plan de coupe (18), sont logées de manière pivotante sur le dispositif d'appui (25) et sont reliées à un dispositif d'entraînement (35a, b) pour transmettre la force au matériau de tuyau (2).

7. Dispositif de séparation (1) selon la revendication 5 ou 6,
**caractérisé en ce que** les plaques de support (14a, b) forment dans une position de repos respectivement avec le plan de coupe (18) un angle (α) inférieur à 90°.

8. Dispositif de séparation selon la revendication 6 ou 7,
**caractérisé en ce que** les dispositifs d'entraînement (35a, b) des plaques de support mobiles (14a, b) du dispositif d'écartement (16) sont constitués d'une source d'entraînement (38a, b) et d'un système de transmission de force (37a, b).

9. Dispositif de séparation selon la revendication 8,
**caractérisé en ce que** la source d'entraînement (38a, b) est réalisée comme un entraînement pneumatique, hydraulique, électrique ou électromécanique.

10. Dispositif de séparation selon la revendication 8 ou 9,
**caractérisé en ce que** le système de transmission de force (37a, b) est constitué d'un levier à deux gras (30a, b) logé sur le dispositif d'appui (25) au moyen d'un axe de rotation (36a, b), levier dont le bras d'entraînement (34a, b) est relié de manière rotative à la source d'entraînement (38a, b) et dont le bras de puissance est réalisé en une seule pièce avec la plaque de support (14a, b).

11. Dispositif de séparation selon la revendication 10,
**caractérisé en ce que** l'axe de rotation (36a, b) du levier (30a, b) est disposé sous la plaque de support (14a, b) respective.

12. Dispositif de séparation selon l'une quelconque des revendications 3 à 11,
**caractérisé en ce que** le dispositif d'appui (25) comporte un premier (6) et un second rails d'appui fixes (22) qui sont alignés, avec leur section d'extrémité tournée vers le plan de coupe (18), sur les plaques de support mobiles (14a, b) respectives du dispositif d'écartement (16) et s'étendent de façon inclinée vers le bas dans la direction s'écartant du plan de coupe (18).

13. Dispositif de séparation selon la revendication 12,
**caractérisé en ce que** le premier rail de support (6) comprend sur sa section d'extrémité opposée au plan de coupe (18) un cadre de guidage (4).

14. Dispositif de séparation selon la revendication 13,
**caractérisé en ce que** le cadre de guidage (4) est un cadre tubulaire doté d'un tube supérieur pivotant (12).

15. Dispositif de séparation selon la revendication 12 ou 13,
**caractérisé en ce que** les rails de support (6, 22) sont constitués respectivement d'une plaque de fond (8, 20) et d'un guidage latéral (10, 24) appliqué perpendiculairement à la plaque de fond (8, 20), les plaques de fond (8, 20) formant avec le plan de coupe (18) respectivement un angle (α) qui est identique à l'angle (α) que les plaques de support (14a, b) enferment dans la position de repos avec le plan de coupe (18).

16. Dispositif de séparation selon la revendication 15,
**caractérisé en ce que** la première plaque de fond (8) est coudée vers le bas sur sa section d'extrémité opposée au plan de coupe (18) et la seconde plaque de fond (20) termine horizontalement dans sa section d'extrémité opposée au plan de coupe (18).

17. Dispositif de séparation selon la revendication 16,
**caractérisé en ce que** les premier (10) et second (24) rails de guidage s'étendent vers l'intérieur au-delà de la longueur des plaques de fond (8, 20) le long des plaques de support mobiles (14a, b) et comprennent dans la zone des éléments d'appui (26a, b) des courbures (27a, b).
